# EUROPÄISCHE PATENTANMELDUNG

(11) **EP 4 238 676 A1**
(43) Veröffentlichungstag der Anmeldung: **06.09.2023**
(21) Anmeldenummer: 23156809.8
(22) Anmeldetag: 15.02.2023
(51) Int. Cl.: B23B 27/16, B23C 5/22

(54) **SPANNVORRICHTUNG ZUR KLEMMENDEN FIXIERUNG EINES SCHNEIDWERKZEUGES IN EINEM WERKZEUGTRÄGER**

(30) Priorität: 28.02.2022 DE 102022104671
(71) Anmelder: Gühring KG, 72458 Albstadt (DE)
(72) Erfinder: Matheis, Klaus, 88605 Sauldorf/Rast (DE)
(74) Vertreter: Gleim, Christian Ragnar

(57) **Zusammenfassung**

Spannvorrichtung 1 zur klemmenden Fixierung eines Schneidwerkzeuges 2 in einem Werkzeugträger 3, wobei die Spannvorrichtung 1 einen ersten Abschnitt 4 mit wenigstens einer Anlagefläche 5 umfasst, welche mit einem eingelegten Schneidwerkzeug 2 mittels einer Spindel 9 zur Anlage bringbar ist, sodass eine Kraft Fi auf das Schneidwerkzeug 2 wirkt, welche eine Verschiebung des Schneidwerkzeuges 2 gegenüber einem Werkzeugträger 3 verhindert, wobei der erste Abschnitt 4 mit der Anlagefläche 5 an einer Hülse 6 angeordnet ist.

## Beschreibung

Die Erfindung betrifft eine Spannvorrichtung zur klemmenden Fixierung eines Schneidwerkzeuges in einem Werkzeugträger.

Die Erfindung liegt auf dem technischen Gebiet von Werkzeugspannsystemen für Werkzeugaufnahmen. Spannmittel spielen heute eine entscheidende Rolle, um die Leistungsfähigkeit von Werkzeug und Maschine voll auszuschöpfen. Die Spanntechnik stellt sowohl die Verbindung zwischen Maschinenspindel und Werkzeug als auch die zwischen Maschinentisch und Werkstück während der Bearbeitung sicher. Die Fixierung der Werkzeuge und Werkstücke erfolgt dabei elektrisch, pneumatisch, hydraulisch, per Vakuum oder mechanisch von Hand.

Bei den großen auftretenden Kräften, insbesondere in der industriellen Fertigung, werden die Verbindungen zwischen den Schneidmitteln und dem Werkzeuggrundkörper hohen Belastungen ausgesetzt, wodurch sich Positionsveränderungen der Schneidmittel gegenüber dem Werkzeuggrundkörper und damit einhergehend ein Abweichen von Positionsvorgaben mit entsprechender Bearbeitungsungenauigkeit ergeben können.

Die Belastungen in den Verbindungen treten einerseits durch große Vorschubgeschwindigkeiten und zähem oder hartem zu bearbeitenden Werkstoff auf, und andererseits durch die hohen Drehzahlen der Werkzeuge. So wirkt beispielsweise bei einer Drehzahl von 30.000 U/min, nur Fliehkraft bedingt, bereits eine Belastung von ca. einer Tonne auf die Verbindung zwischen einer Schneidmittel-Kassette und dem Werkzeuggrundkörper.

Die Verbindung zwischen Werkzeug und Spindel wird meist über einen Kegelschaft hergestellt. Für die Aufnahme der Werkzeughalter in die Maschine sind genormte Schnittstellen unerlässlich. Die verschiedenen Schnittstellen unterscheiden sich dabei in ihrer Automatisierbarkeit, der Spannsicherheit und der Wechselgenauigkeit.

Bisher wird die Befestigung von Schneidwerkzeugen im Werkzeughalter mittels Schraubverbindungen realisiert, die das Schneidwerkzeug in den Werkzeughalter einklemmen. Teilweise sind dazu Ausnehmungen am Schneidwerkzeug vorgehsehen, mit denen das Schraubmittel in Eingriff steht, um eine ausreichende Kraftübertragung zur Befestigung sicherzustellen. Für jedes Schneidwerkzeug ist ein entsprechendes Schraubmittel erforderlich, welches eine passende Schnittstelle aufweist, um mit dem jeweiligen Schneidwerkzeug in Eingriff gebracht zu werden.

DE 19851928 B4 zeigt eine Klemmpratze mit einem konischen Kopf, die in eine Bohrung im Werkzeugträger einschraubbar ist und die in eine Ausnehmung in einer Fläche des Schneidkörpers eingreift. Nachteilig dabei ist, dass die Schneidkanten der Wendeschneidplatte - durch das notwendige Einschleifen der Ausnehmung - unterbrochen und dadurch auch die Rückdruckanlagefläche vermindert wird.

Ferner sind aus dem Stand der Technik die US 2020/0368823A1, die EP 0247011A2, die CN 102756137A und die US 2007/0274791A1 bekannt.

Die Erfindung hat die Aufgabe eine Spannvorrichtung bereitzustellen, welche die Nachteile im Stand der Technik überwindet und eine universelle Befestigung des eingelegten Schneidwerkzeuges im Werkzeughalter ermöglicht, ohne die Oberfläche des Schneidwerkzeuges zu verändern.

Die Aufgabe wird durch eine Spannvorrichtung zur klemmenden Fixierung eines Schneidwerkzeuges in einem Werkzeugträger mit den Merkmalen des unabhängigen Anspruchs 1 gelöst. Vorteilhafte Ausführungsformen bilden den Gegenstand der zugehörigen Unteransprüche.

Die Erfindung umfasst eine Spannvorrichtung zur klemmenden Fixierung eines Schneidwerkzeuges in einem Werkzeugträger. Die Spannvorrichtung umfasst einen ersten Abschnitt mit wenigstens einer Anlagefläche, welche mit einem eingelegten Schneidwerkzeug mittels einer Spindel zur Anlage bringbar ist. So wirkt eine Kraft F₁ auf das Schneidwerkzeug, welche eine Verschiebung des Schneidwerkzeuges gegenüber einem Werkzeugträger verhindert. Der erste Abschnitt mit der Anlagefläche ist an einer Hülse angeordnet. Dies ermöglicht, dass eine Spannvorrichtung für unterschiedliche Schneidwerkzeuge verwendet werden kann, ohne dass die Oberfläche der Schneidwerkzeuge spezielle Ausnehmungen für eine Spannvorrichtung aufweisen muss.

Ein vorteilhafter Aspekt sieht vor, dass die Hülse an einem ersten Endabschnitt einen Vorsprung zur Herstellung einer Verbindung mit der Spindel umfasst. So kann das eingelegte Schneidwerkzeug schnell und einfach in den Werkzeugträger eingespannt und ausgetauscht werden.

Besonders vorteilhaft ist, wenn die Hülse zumindest abschnittsweise beabstandet am Werkzeugträger angeordnet ist. Dies ermöglicht eine Bewegung der Hülse gegenüber dem Werkzeugträger.

Nach einem bevorzugten Aspekt wird ein der Anlagefläche gegenüberliegender Endabschnitt der Hülse durch eine Drehbewegung der Spindel beim Einschub in den Werkzeugträger in Richtung des Werkzeugträgers gedrückt. Dadurch kann das eingelegte Schneidwerkzeug durch eine einfache Drehbewegung der Spindel im Werkzeugträger eingespannt werden.

Nach einem vorteilhaften Aspekt weist der Hülsenabschnitt einen Innendurchmesser zur Aufnahme der Spindel mit einem Gewinde mit einer Steigung S₁ und einen Außendurchmesser zur Befestigung im Werkzeugträger mit einem Gewinde mit einer Steigung S₂ auf. Dadurch entsteht eine entsprechende Keilwirkung auf das Schneidwerkzeug, was eine sichere Verbindung auch bei großer Krafteinwirkung ermöglicht.

Es hat sich als vorteilhaft herausgestellt, wenn der Werkzeugträger eine Ausnehmung umfasst, gegen die das Schneidwerkzeug gedrückt wird, um eine Verschiebung des Schneidwerkzeuges gegenüber dem Werkzeugträger zu verhindern. Dies ermöglicht eine unmittelbare Befestigung des eingelegten Schneidwerkzeuges im Werkzeugträger.

Nach einem bevorzugten Aspekt umfasst die Spannvorrichtung ferner eine Werkzeugaufnahme mit einer Ausnehmung, gegen die das Schneidwerkzeug gedrückt wird, um eine Verschiebung des Schneidwerkzeuges gegenüber dem Werkzeugträger zu verhindern. Dies ermöglicht eine mittelbare Befestigung des eingelegten Schneidwerkzeuges im Werkzeugträger.

Vorteilhafterweise ist die eine erste Anlagefläche in einem ersten Winkel mit dem Schneidwerkzeug zur Anlage bringbar und eine zweite Anlagefläche in einem zweiten Winkel mit dem Schneidwerkzeug zur Anlage bringbar und der erste Winkel ist ungleich dem zweiten Winkel. Dies ermöglicht den universellen Einsatz einer Spannvorrichtung für unterschiedliche Schneidwerkzeuge.

Im Folgenden wird die Erfindung anhand einer Zeichnung näher erläutert.

Es zeigen:
- Fig. 1: einen Schnitt durch eine erfindungsgemäße Spannvorrichtung mit einem eingelegten Schneidwerkzeug in einem Werkzeugträger mit einer Werkzeugaufnahme;
- Fig. 2: einen Schnitt durch eine erfindungsgemäße Spannvorrichtung mit einem eingelegten Schneidwerkzeug in einem Werkzeugträger;
- Fig. 3: eine Draufsicht auf eine erfindungsgemäße Spannvorrichtung mit einem eingelegten Schneidwerkzeug in einem Werkzeugträger mit einer Werkzeugaufnahme; und
- Fig. 4: eine Draufsicht auf eine erfindungsgemäße Spannvorrichtung mit einem eingelegten Schneidwerkzeug in einem Werkzeugträger.

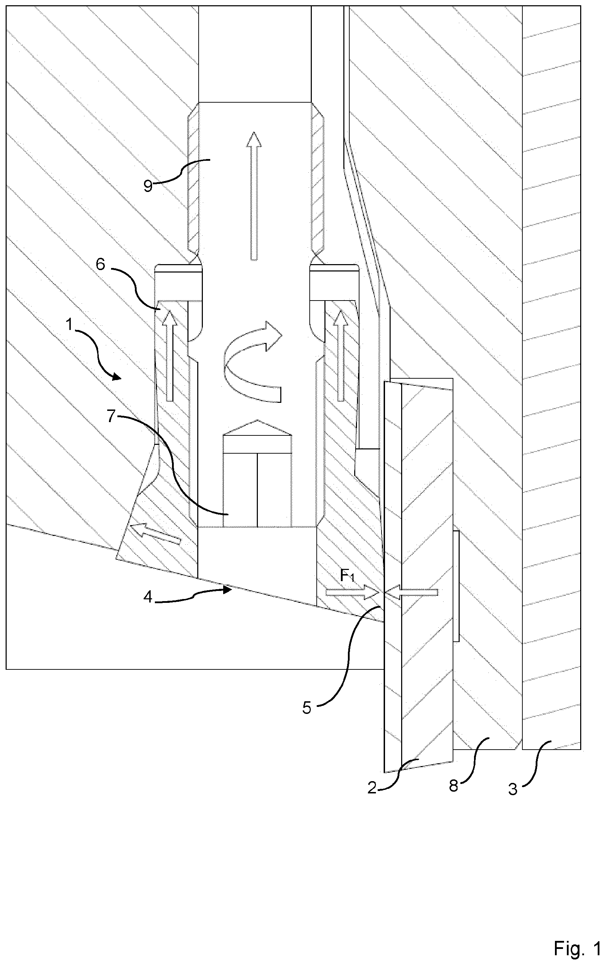

**Fig. 1** zeigt einen Schnitt durch eine erfindungsgemäße Spannvorrichtung 1 mit einem eingelegten Schneidwerkzeug 2 in einem Werkzeugträger 3 mit einer Werkzeugaufnahme 8. Die Spannvorrichtung 1 zur klemmenden Fixierung eines Schneidwerkzeuges 2 in einem Werkzeugträger 3 umfasst einen ersten Abschnitt 4 mit wenigstens einer Anlagefläche 5, welche mit einem eingelegten Schneidwerkzeug 2 mittels einer Spindel 9 zur Anlage bringbar ist. Dadurch wirkt eine Kraft F₁ auf das Schneidwerkzeug 2, welche eine Verschiebung des Schneidwerkzeuges 2 gegenüber einem Werkzeugträger 3 verhindert. Der erste Abschnitt 4 mit der Anlagefläche 5 ist an einer Hülse 6 angeordnet.

Die Hülse 6 umfasst an einem ersten Endabschnitt einen Vorsprung 7 zur Herstellung einer Verbindung mit der Spindel 9.

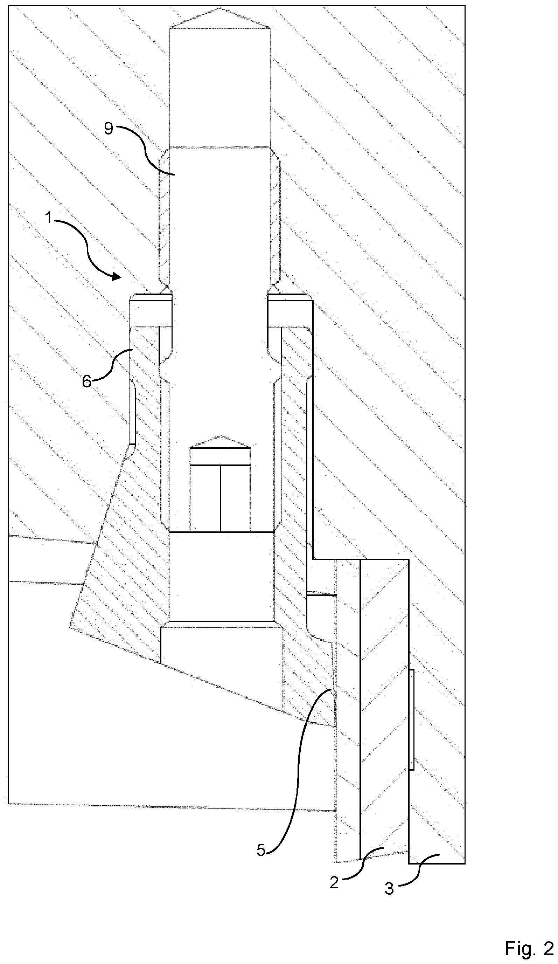

In **Fig. 2** ist ein Schnitt durch eine erfindungsgemäße Spannvorrichtung 1 mit einem eingelegten Schneidwerkzeug 2 in einem Werkzeugträger 3 gezeigt. Ein der Anlagefläche 5 gegenüberliegender Endabschnitt der Hülse 6 wird durch eine Drehbewegung der Spindel 9 beim Einschub in den Werkzeugträger 3 in Richtung des Werkzeugträgers 3 gedrückt. Die Hülse 6 ist zumindest abschnittsweise beabstandet am Werkzeugträger 3 angeordnet. So ist eine Bewegung der Hülse möglich.

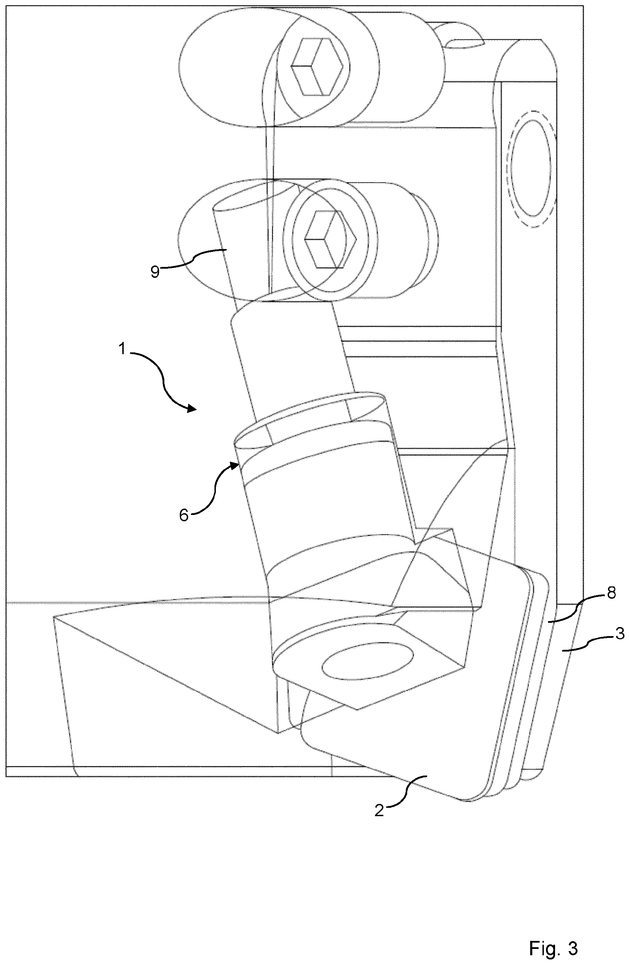

**Fig. 3** zeigt eine Draufsicht auf eine erfindungsgemäße Spannvorrichtung 1 mit einem eingelegten Schneidwerkzeug 2 in einem Werkzeugträger 3 mit einer Werkzeugaufnahme 8. Der Hülsenabschnitt 6 weist einen Innendurchmesser zur Aufnahme der Spindel 9 mit einem Gewinde mit einer Steigung S₁ und einen Außendurchmesser zur Befestigung im Werkzeugträger 3 mit einem Gewinde mit einer Steigung S₂ auf.

Aus Fig. 3 ist ersichtlich, dass die Spannvorrichtung 1 ferner eine Werkzeugaufnahme 8 mit einer Ausnehmung umfasst, gegen die das Schneidwerkzeug 2 gedrückt wird, um eine Verschiebung des Schneidwerkzeuges 2 gegenüber dem Werkzeugträger 3 zu verhindern. Die Werkzeugaufnahme 8 ist beispielsweise mittels einer kraftschlüssigen Verbindung an den Werkzeugträger 3 angeordnet.

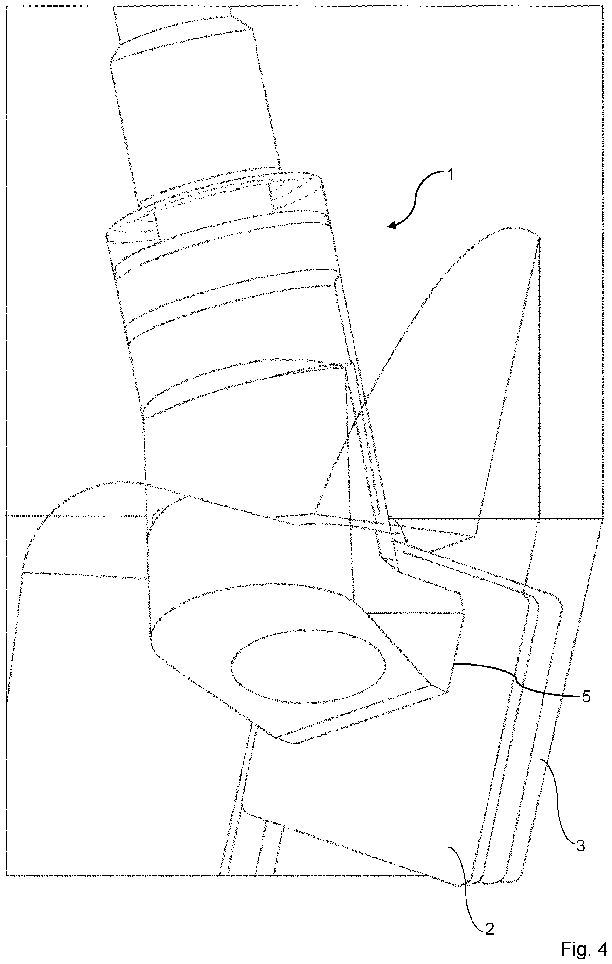

In **Fig. 4** ist eine Draufsicht auf eine erfindungsgemäße Spannvorrichtung 1 mit einem eingelegten Schneidwerkzeug 2 in einem Werkzeugträger 3 gezeigt. Der Werkzeugträger 3 umfasst eine Ausnehmung gegen die das Schneidwerkzeug 2 gedrückt wird, um eine Verschiebung des Schneidwerkzeuges 2 gegenüber dem Werkzeugträger 3 zu verhindern.

Die eine erste Anlagefläche 5 ist in einem ersten Winkel mit dem Schneidwerkzeug 2 zur Anlage bringbar. Eine zweite Anlagefläche 5 ist in einem zweiten Winkel mit dem Schneidwerkzeug 2 zur Anlage bringbar. Der erste Winkel ist ungleich dem zweiten Winkel.

## Patentansprüche

1. Spannvorrichtung (1) zur klemmenden Fixierung eines Schneidwerkzeuges (2) in einem Werkzeugträger (3), wobei die Spannvorrichtung (1) einen ersten Abschnitt (4) mit wenigstens einer Anlagefläche (5) umfasst, welche mit einem eingelegten Schneidwerkzeug (2) mittels einer Spindel (9) zur Anlage bringbar ist, sodass eine Kraft F₁ auf das Schneidwerkzeug (2) wirkt, welche eine Verschiebung des Schneidwerkzeuges (2) gegenüber einem Werkzeugträger (3) verhindert, wobei der erste Abschnitt (4) mit der Anlagefläche (5) an einer Hülse (6) angeordnet ist.

2. Spannvorrichtung (1) nach Anspruch 1, wobei die Hülse (6) an einem ersten Endabschnitt einen Vorsprung (7) zur Herstellung einer Verbindung mit der Spindel (9) umfasst.

3. Spannvorrichtung (1) nach einem der vorhergehenden Ansprüche, wobei die Hülse (6) zumindest abschnittsweise beabstandet am Werkzeugträger (3) angeordnet ist.

4. Spannvorrichtung (1) nach einem der vorhergehenden Ansprüche, wobei ein der Anlagefläche (5) gegenüberliegender Endabschnitt der Hülse (6) durch eine Drehbewegung der Spindel (9) beim Einschub in den Werkzeugträger (3) in Richtung des Werkzeugträgers (3) gedrückt wird.

5. Spannvorrichtung (1) nach einem der vorhergehenden Ansprüche, wobei der Hülsenabschnitt (6) einen Innendurchmesser zur Aufnahme der Spindel (9) mit einem Gewinde mit einer Steigung S₁ und einen Außendurchmesser zur Befestigung im Werkzeugträger (3) mit einem Gewinde mit einer Steigung S₂ aufweist.

6. Spannvorrichtung (1) nach einem der vorhergehenden Ansprüche, wobei der Werkzeugträger (3) eine Ausnehmung umfasst, gegen die das Schneidwerkzeug (2) gedrückt wird, um eine Verschiebung des Schneidwerkzeuges (2) gegenüber dem Werkzeugträger (3) zu verhindern.

7. Spannvorrichtung (1) nach einem der vorhergehenden Ansprüche, ferner umfassend eine Werkzeugaufnahme (8) mit einer Ausnehmung gegen die das Schneidwerkzeug (2) gedrückt wird, um eine Verschiebung des Schneidwerkzeuges (2) gegenüber dem Werkzeugträger (3) zu verhindern.

8. Spannvorrichtung (1) nach einem der vorhergehenden Ansprüche, wobei die eine erste Anlagefläche (5) in einem ersten Winkel mit dem Schneidwerkzeug (2) zur Anlage bringbar ist und eine zweite Anlagefläche (5) in einem zweiten Winkel mit dem Schneidwerkzeug (2) zur Anlage bringbar ist und der erste Winkel ungleich dem zweiten Winkel ist.
